# EUROPÄISCHE PATENTSCHRIFT

(11) **EP 2 923 540 B1**
(45) Veröffentlichungstag und Bekanntmachung des Hinweises auf die Patenterteilung: **26.07.2017**
(21) Anmeldenummer: 15150431.3
(22) Anmeldetag: 08.01.2015
(51) Int. Cl.: A01B 59/00, A01B 59/06

(54) **Landwirtschaftliche Arbeitsmaschine**
Agricultural work machine
Machine agricole

(30) Priorität: 27.03.2014 DE 102014104283
(43) Veröffentlichungstag der Anmeldung: 30.09.2015
(73) Patentinhaber: CLAAS Tractor S.A.S., 78141 Vélizy-Villacoublay Cedex (FR)
(72) Erfinder: Gaydon, Régis, 78000 Versailles (FR); Reinhardt, Alexander, 78140 Vélizy (FR)
(74) Vertreter: Budach, Steffen

(56) Entgegenhaltungen:
- EP-A2- 2 574 798
- WO-A1-2008/089794
- US-A- 6 061 617
- US-A1- 2006 047 393
- US-A1- 2008 252 600

## Beschreibung

Die Erfindung betrifft eine landwirtschaftliche Arbeitsmaschine, die als Traktor oder Systemfahrzeug ausgebildet ist, mit einer auf einem Fahrerstand angeordneten Gruppe von Bedienelementen, die mehreren im Heck- und/oder Frontbereich und/oder Anbaubereich der Arbeitsmaschine vorgesehenen hydraulischen oder elektrischen Kuppelelementen zugeordnet sind, wobei die Kuppelelemente mit Anschlussleitungen von an die Arbeitsmaschine angebauten Arbeitsgeräten verbindbar sind.

Landwirtschaftliche Traktoren sind heckseitig und häufig auch frontseitig mit einem hydraulischen Kraftheber sowie einer Zapfwelle zur Aufnahme und zum Antrieb von Arbeitsgeräten versehen. Zur Realisierung weiterer Antriebsfunktionen und zur Steuerung bzw. Regelung des entsprechenden Arbeitsgeräts sind die Traktoren in diesen Anbauräumen mit hydraulischen oder elektrischen Steckanschlüssen ausgerüstet, an die Schlauchleitungen oder Kabel ankuppelbar sind. Diese Steckanschlüsse dienen zusammen mit Datenkabeln außerdem auch als Schnittstelle zwischen den auf einem Fahrerstand bzw. in einer Fahrerkabine angeordneten Bedienelemente sowie Displays des Traktors und einer Regeleinrichtung bzw. einer CPU des Arbeitsgeräts. Die landwirtschaftliche Arbeitsmaschine kann auch als Systemfahrzeug, womit beispielsweise Trac-Fahrzeuge oder Geräteträger gemeint sind, ausgebildet sein. Bei diesen ist neben den Anbauräumen im Front- und Heckbereich zumeist ein zusätzlicher Anbauraum im Zwischenachsbereich vorgesehen. In diesem Fall können entsprechende Steckanschlüsse auch an dieser Stelle vorgesehen sein.

Es ist dabei erforderlich, die Funktionen der Steckanschlüsse und der Bedienelemente bzw., des Displays aufeinander anzustimmen. Um Fehlfunktionen am Arbeitsgerät zu vermeiden, ist eine eindeutige Zuordnung der Schnittstelle, also der hydraulischen oder elektrischen Steckanschlüsse zu den einzelnen auf dem Fahrerstand angeordneten Bedienelementen eine zwingende Voraussetzung. Der Fahrer muss sich nämlich nach dem Anschließen des Arbeitsgerätes absolut sicher sein, dass er durch Betätigung eines bestimmten Bedienelements an diesem eine bestimmte Verstellfunktion auslöst.

Ein hydraulisches Steuersystem eines landwirtschaftlichen Traktors zur Steuerung der Funktionen eines angebauten Arbeitsgerätes der im Oberbegriff des Patentanspruchs 1 genannten Gattung ist aus der EP 2 574 798 A2 bekannt. Jeder aus zwei Steckanschlüssen bestehenden hydraulischen Verbindung mit dem Verstellelement des Arbeitsgerätes ist dabei individuell steuerbar, wobei ein als Bedienhebel ausgebildetes Bedienelement über eine Sensoreinheit mit einer Electronic Control Unit (ECU) in Verbindung steht und entsprechende Funktionen über ein Display anzeigt werden. An Stelle einzelner Bedienhebel kann auch ein Driver Terminal, das sowohl die Bedienelemente als auch das Display aufweist, vorgesehen sein. Das Display zeigt einzelne Felder, die den über die paarweisen Steckanschlüsse gesteuerte Funktionen zugeordnet sind. Dabei soll die entsprechende Belegung veränderbar sein.

Weiterhin ist aus der WO 2008089794 A1 eine Baumaschine bekannt, die mit unterschiedlichen Werkzeugen kombinierbar ist. Hydraulische Anschlüsse, die an der Baumaschine zum Ankuppeln der Werkzeuge vorgesehen sind, sollen dabei sehr flexibel an die jeweiligen Funktionen der Werkzeuge anpassbar sein. Zu diesem Zweck soll aus einer Liste, die in einer CPU der Baumaschine hinterlegt ist, das entsprechende Werkzeug ausgewählt und einem Joystick zugeordnet werden.

Es ist Aufgabe der vorliegenden Erfindung, eine funktionelle Zuordnung von Bedienelementen und Steckanschlüssen an einer landwirtschaftlichen Arbeitsmaschine vorzusehen, deren Bedienung mit einem geringen Kennzeichnungs- und Einstellaufwand verbunden ist, wobei Zuordnungsfehler sicher vermieden werden können.

Diese Aufgabe wird, ausgehend vom Oberbegriff des Patentanspruchs 1, in Verbindung mit dessen kennzeichnenden Merkmalen gelöst. Gemäß dem kennzeichnenden Teil des Patentanspruchs 1 sollen die Bedienelemente und die Kuppelelemente jeweils mit einer visuellen Kennzeichnung versehen sein, die Aufschluss über die Zuordnung des jeweiligen Bedienelements zu einem der Kuppelelemente gibt, dass Eingabemittel vorgesehen sind, über die zumindest ein Kuppelelement mit einem der anderen Bedienelemente in Wirkverbindung bringbar ist und dass nach einer entsprechenden Verwendung der Eingabemittel eine entsprechende Neuordnung der visuellen Kennzeichnung erfolgt. Sowohl an den beispielsweise als hydraulische Remote-Anschlüssen ausgebildeten Kuppelelementen als auch an den Bedienelementen, die aus Kippschaltern, einem Joystick usw. bestehen, sind folglich visuelle Indentifizierungsmerkmale angebracht, die dann veränderbar sind, wenn die von einem Kuppelelement ausgehende Funktion wegen einer besseren Bedienbarkeit auf ein anderes Bedienelement gelegt wird. Dabei ist es nicht erforderlich, diese Funktionen durch die Änderung eines Programms oder durch zusätzliche Dateneingaben zu verändern, so dass die gesamte Einrichtung insgesamt einfach zu bedienen ist.

Demgegenüber kann der Fahrer bei der gattungsgemäßen landwirtschaftlichen Arbeitsmaschine nach der EP 2 574 798 A2 und bei der Einrichtung nach der WO 2008089794 A1 die tatsächliche Belegung nur der zentralen Elektronikeinrichtung (ECU) bzw. deren Display entnehmen. Zu diesem Zweck muss er die zentrale Elektronikeinrichtung (ECU) in einen geeigneten Anzeigemodus schalten, wofür die entsprechenden Kenntnisse voraus zu setzen sind und was mit einem zusätzlichen Zeitaufwand verbunden ist. Im Übrigen stehen während dieser Zeit möglicherweise ebenfalls wichtige Anzeigefunktionen auf dem Display nicht mehr zur Verfügung. Entsprechende Stillstandzeiten einer landwirtschaftlichen Arbeitsmaschine, die dadurch zustande kommen, sind aber völlig inakzeptabel. Weiterhin ist zu berücksichtigen, dass das Display und die Bedienhebel für entsprechende Hydraulikfunktionen in der Regel voneinander beabstandet sind. was eine intuitive Bedienung erschwert.

Gemäß einer weiteren Ausgestaltung der Erfindung sollen die Bedienelemente als Tasten eines Tastenfeldes ausgebildet sein. Jede dieser Tasten, die beispielsweise Bestandteil eines Tastenfeldes sind, ist visuell gekennzeichnet, wodurch eine entsprechende visuelle Zuordnung zu einer außerhalb des Fahrerstandes oder der Fahrerkabine befindlichen Gruppe von hydraulischen oder elektrischen Kuppelelementen möglich ist. Die entsprechende Zuordnung kann beispielsweise durch eine Kennzeichnung mittels Farben, Ziffern, Buchstaben, Symbolen usw. erfolgen.

Gemäß einer bevorzugten Ausführungsform der Erfindung soll die visuelle Kennzeichnung mittels an den Bedienelementen und an den Kuppelelementen austauschbarer Steckelemente erfolgt. Diese Steckelemente, die während einer Verbindung des Arbeitsgeräts mit dem entsprechenden Kuppelelement von diesem entfernt werden, können neben dem zugeordneten Bedienelement auf die Bedienkonsole aufgesteckt werden, so dass eine exakte visuelle Zuordnung der Belegung der Kuppelelemente und der Bedienelemente erfolgt. Alternativ dazu besteht die Möglichkeit, die funktionelle Verbindung dadurch anzuzeigen, dass die Tasten mit Farb-LEDs versehen sind, die mit der jeweiligen Farbe des belegten Steckelements leuchten, sich also farblich an diese anpassen.

Im Zusammenhang mit der Ausbildung der Tasten als Farb-LEDs ist weiterhin vorgesehen, dass die Eingabevorrichtung wirkungsmäßig mit einer Umschalteinrichtung verbunden ist, die nach einer Änderung der Zuordnung in entsprechender Weise selbsttätig die farbliche Kennzeichnung der Tasten oder sonstiger Bedienelemente ändert. Zur Verbesserung des Bedienkomforts kann mittels der Umschalteinrichtung die Belegung an den Bedienelementen verändert werden, wobei dann diese Änderung in entsprechender Weise durch einen Farbwechsel der den Tasten zugeordneten Farb-LEDs berücksichtigt wird.

Die Erfindung ist nicht auf die angegebene Kombination der Merkmale des unabhängigen Patentanspruchs 1 und der von diesem abhängigen Patentansprüche beschränkt. Es ergeben sich darüber hinaus weitere Möglichkeiten, einzelne Merkmale, insbesondere dann, wenn sie sich aus den Patentansprüchen, der nachfolgenden Beschreibung der Ausführungsbeispiele oder unmittelbar aus der Zeichnung ergeben, miteinander zu kombinieren. Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung und aus der Zeichnung, in der zwei Ausführungsbeispiele der Erfindung vereinfacht dargestellt sind. Es zeigen:
- Fig. 1: als schematische Darstellung eine Teilansicht eines landwirtschaftlichen Traktors, der mit einem als Ballenpresse ausgebildeten Arbeitsgerät verbunden ist,
- Fig. 2: eine perspektivische Teilansicht einer Bedien- und Anzeigeeinrichtung des Traktors, bei der eine Zuordnung von zur Bedienung vorgesehenen Tasten durch Farb-LEDs angezeigt wird,
- Fig. 3: einen Ausschnitt aus der Darstellung der Figur 2 mit einer alternativen Ausgestaltung einer den Tasten zugeordneten visuellen Kennzeichnung und
- Fig. 4: eine Teilansicht auf im Heckbereich einer Arbeitsmaschine angeordnete Steckelemente.

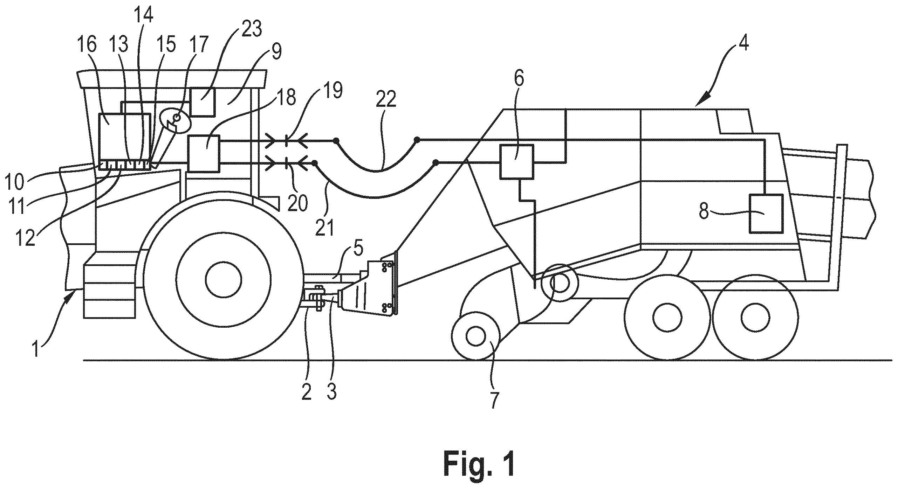

In der Figur 1 ist eine als Traktor 1 ausgebildete Arbeitsmaschine dargestellt, der in seinem Heckbereich an heb- und senkbaren Unterlenkern 2 eines hydraulischen Krafthebers eine Deichsel 3 einer Ballenpresse 4 aufnimmt. Diese Ballenpresse 4 wird über eine Gelenkwelle 5 von einer nicht näher dargestellten Zapfwelle des Traktors 1 angetrieben und weist unter anderem eine über eine erste hydraulische Verstelleinrichtung 6 einstellbare Pick-up 7 sowie einen über eine zweite Verstelleinrichtung 8 einstellbaren im Einzelnen nicht dargestellten Förderkanal für ein Erntegut auf.

Der Traktor 1 weist einen als Fahrerkabine ausgebildeten Fahrerstand 9 auf, auf welchem eine mit tastenförmigen Bedienelementen 10 bis 15 versehenes Display 16 und ein Joystick 17 angeordnet sind. Diese tastenförmige Bedienelemente 10 bis 15, das Display 16 und der Joystick 17 stehen mit einer hydraulischen Steuereinrichtung 18 in Verbindung und beherrschen deren Verstellfunktionen. Dabei ist die Steuereinrichtung 18 mit einer Druckmittelquelle verbunden und besteht vorzugsweise aus einem Block von mehreren hydraulischen Wegeventilen, die elektromagnetisch vorgesteuert sind. Der Traktor 1 ist in seinem Heckbereich, also im Bereich seines Krafthebers, mit mehreren Kuppelelementen versehen, von denen im vorliegenden Fall zwei als Remoteanschlüsse ausgebildete Kuppelelemente 19 und 20 über Paare von als Druckmittelschläuche ausgebildeten Anschlussleitungen 21 und 22 jeweils mit den vorgenannten hydraulischen Verstelleinrichtungen 6 und 8 verbunden sind. Eine gezielte Zuordnung der entsprechenden Bedienelemente 10 bis 15 zu den Kuppelelementen, also im Fall der Figur 1 zu den Kuppelelementen 19 und 20 kann mittels einer Umschalteinrichtung 23 erfolgen.

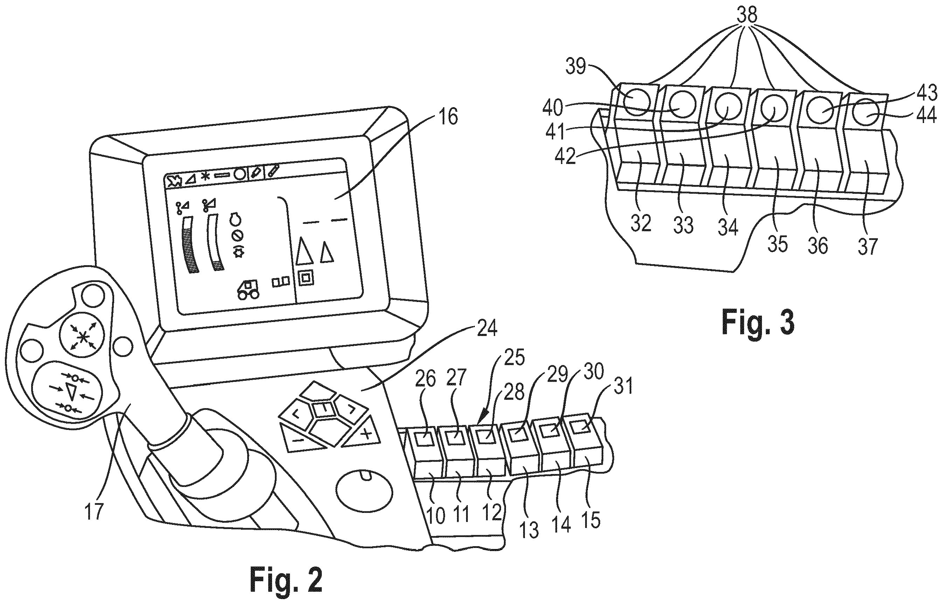

Aus der Figur 2 geht die aus dem Display 16, dem Joystick 17 und den Bedienelementen 10 bis 15 bestehende, auf dem Fahrerstand 9 nach Figur 1 angeordnete Einheit hervor. Das Display 16 weist danach mehre Anzeigefelder auf und ist gemeinsam mit dem Joystick 17 auf einer Bedienkonsole 24 angeordnet. Weiterhin befindet sich auf der Bedienkonsole 24 auch ein mit den einzelnen tastenförmigen Bedienelementen 10 bis 15 versehenes Tastenfeld 25. Jedes der einzelnen tastenförmigen Bedienelemente 10 bis 15 nimmt eine Farb-LED 26 bis 31 auf, das eine bestimmte Farbe signalisiert, wobei dessen Farbe selbsttätig über die Umschalteinrichtung 23 (Figur 1) geändert wird, sofern sich die Belegung der Bedienelemente 10 bis 15 in Bezug auf die steuerbaren Kuppelelemente, von denen gemäß Figur 1 nur zwei Kuppelelemente 19 und 20 aktiv sind, ändert. Als farbliche Kennzeichnung in einer Ausgangsstellung können beispielsweise die Farb-LEDs 26 rot, 27 grün, 28 blau, 29 gelb, 30 weiß und 31 braun sein. Ist beispielsweise ein grün gekennzeichnetes Steckelement über die Umschalteinrichtung 23 auf das Bedienelement 10 gelegt, so ändert dessen LED seine Farbe von rot auf grün. Die Kuppelelemente sind dabei vorzugsweise dauerhaft mit einer bestimmten farblichen Kennzeichnung versehen. Eine derartige Änderung der Belegung kann zur Verbesserung des Bedienungskomforts sinnvoll sein.

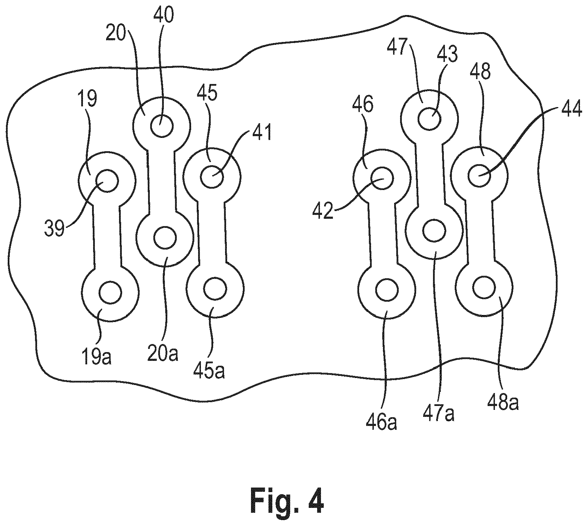

Eine alternative Lösung für eine Kennzeichnung von Bedienelementen 32 bis 37 geht aus der Figur 3 hervor. Danach ist jedem der einzelnen Bedienelemente 32 bis 37 ein Steckplatz 38 zugeordnet, in welche Steckplätze 38 jeweils ein farblich oder durch eine Ziffer bzw. einen Buchstaben gekennzeichnetes Steckelement 39 bis 44 einsteckbar ist. Das entsprechende Steckelement 39, 40, 41, 42, 43 oder 44 dient als Verschlusskappe eines der in Figur 4 dargestellten Kuppelelemente 19, 20, 45, 46, 47 oder 48 sowie 19a, 20a, 45a, 46a, 47a oder 48a, die ein Paar von Arbeitsanschlüssen bilden und von denen jeweils eines durch den Fahrer entnommen und im entsprechenden Steckplatz 38 fixiert werden kann. Wird in diesem Fall eine Zuordnung geändert, so muss der Fahrer in entsprechender Weise an diese die Belegung der Steckplätze 38 anpassen. Dabei kann jeweils eine der Verschlusskappen über eine flexible Haltelasche am entsprechenden Kuppelelement fixiert sein und nach ihrer Entfernung aus einer Aufnahmebohrung des Kuppelelements unverlierbar an diesem gehalten werden.

### Bezugszeichenliste

- 1: Traktor
- 2: Unterlenker
- 3: Deichsel
- 4: Ballenpresse
- 5: Gelenkwelle
- 6: erste hydraulische Verstelleinrichtung
- 7: Pick-up
- 8: zweite hydraulische Verstelleinrichtung
- 9: Fahrerstand
- 10: Bedienelement
- 11: Bedienelement
- 12: Bedienelement
- 13: Bedienelement
- 14: Bedienelement
- 15: Bedienelement
- 16: Display
- 17: Joystick
- 18: hydraulische Steuereinrichtung
- 19: Kuppelelement
- 19a: Kuppelelement
- 20: Kuppelelement
- 20a: Kuppelelement
- 21: Anschlussleitung
- 22: Anschlussleitung
- 23: Umschalteinrichtung
- 24: Bedienkonsole
- 25: Tastenfeld
- 26: Farb-LED rot
- 27: Farb-LED grün
- 28: Farb-LED blau
- 29: Farb-LED gelb
- 30: Farb-LED weiß
- 31: Farb-LED braun
- 32: Bedienelement
- 33: Bedienelement
- 34: Bedienelement
- 35: Bedienelement
- 36: Bedienelement
- 37: Bedienelement
- 38: Steckplatz
- 39: Steckelement rot
- 40: Steckelement grün
- 41: Steckelement blau
- 42: Steckelement gelb
- 43: Steckelement weiß
- 44: Steckelement braun
- 45: Kuppelelement oben
- 45a: Kuppelelement unten
- 46: Kuppelelement oben
- 46a: Kuppelelement unten
- 47: Kuppelelement oben
- 47a: Kuppelelement unten
- 48: Kuppelelement oben
- 48a: Kuppelelement unten

## Patentansprüche

1. Landwirtschaftliche Arbeitsmaschine, die als Traktor (1) oder Systemfahrzeug ausgebildet ist, mit einer auf einem Fahrerstand (9) angeordneten Gruppe von Bedienelementen (10 bis 15; 32 bis 37), die mehreren im Heck- und/oder Frontbereich und/oder Anbaubereich der Arbeitsmaschine vorgesehenen hydraulischen oder elektrischen Kuppelelementen (19, 19a, 20, 20a, 45, 45a, 46, 46a, 47, 47a, 48, 48a) zugeordnet sind, wobei die Kuppelelemente (19, 19a, 20, 20a, 45, 45a, 46, 46a, 47, 47a, 48, 48a) mit Anschlussleitungen (21, 22) von an die Arbeitsmaschine angebauten Arbeitsgeräten (4) verbindbar sind, **dadurch gekennzeichnet, dass** die Bedienelemente (10 bis 15; 32 bis 37) und die Kuppelelemente (19, 19a, 20, 20a, 45, 45a, 46, 46a, 47, 47a, 48, 48a) jeweils mit einer visuellen Kennzeichnung versehen sind, die Aufschluss über die Zuordnung des jeweiligen Bedienelements (10 bis 15; 32 bis 37) zu einem der Kuppelelemente (19, 19a, 20, 20a, 45, 45a, 46, 46a, 47, 47a, 48, 48a) gibt, dass Eingabemittel vorgesehen sind, über die zumindest ein Kuppelelement (19, 19a, 20, 20a, 45, 45a, 46, 46a, 47, 47a, 48, 48a) mit einem der anderen Bedienelemente (10 bis 15; 32 bis 37) in Wirkverbindung bringbar ist und dass nach einer Verwendung der Eingabemittel eine entsprechende Neuordnung der visuellen Kennzeichnung erfolgt.

2. Landwirtschaftliche Arbeitsmaschine nach Patentanspruch 1, **dadurch gekennzeichnet, dass** die Bedienelemente (10 bis 15) als beleuchtete Tasten eines Tastenfeldes (25) ausgebildet sind.

3. Landwirtschaftliche Arbeitsmaschine nach einem der Patentansprüche 1 oder 2, **dadurch gekennzeichnet, dass** die visuelle Kennzeichnung mittels unterschiedlicher Farben erfolgt.

4. Landwirtschaftliche Arbeitsmaschine nach Patentanspruch 1, **dadurch gekennzeichnet, dass** die visuelle Kennzeichnung mittels unterschiedlicher numerischer Ziffern oder Buchstaben erfolgt.

5. Landwirtschaftliche Arbeitsmaschine nach Patentanspruch 1, **dadurch gekennzeichnet, dass** die visuelle Kennzeichnung mittels an den Bedienelementen (32 bis 37) anbringbarer und zwischen diesen austauschbarer Steckelemente (39, 40, 41, 42, 43, 44) erfolgt.

6. Landwirtschaftliche Arbeitsmaschine nach Patentanspruch 5, **dadurch gekennzeichnet, dass** die Steckelemente (39, 40, 41, 42, 43, 44) von den Kuppelelementen (19, 20, 45, 46, 47, 48) entnehmbar und an Steckplätzen (38) der Bedienelemente (32 bis 37) anbringbar sind.

7. Landwirtschaftliche Arbeitsmaschine nach Patentanspruch 5, **dadurch gekennzeichnet, dass** die Steckelemente (39, 40, 41, 42, 43, 44) als von den Kuppelelementen (19, 20, 45, 46, 47, 48) abnehmbare Verschlusskappen ausgebildet sind.

8. Landwirtschaftliche Arbeitsmaschine nach Patentanspruch 2, **dadurch gekennzeichnet, dass** eine Eingabevorrichtung zur Belegung der Bedienelemente (10 bis 15) eines Tastenfeldes (25) wirkungsmäßig mit einer Umschalteinrichtung (23) verbunden ist, die nach einer Änderung der Zuordnung in entsprechender Weise selbsttätig die farbliche Kennzeichnung der Tasten oder sonstiger Bedienelemente (10 bis 15) ändert.

9. Landwirtschaftliche Arbeitsmaschine nach Patentanspruch 8, **dadurch gekennzeichnet, dass** die Tasten oder sonstige Bedienelemente (10 bis 15) Farb-LEDs 26 bis 31) aufweisen, deren jeweilige Farbe über die Eingabevorrichtung veränderbar ist.

## Claims

1. An agricultural working machine which is in the form of a tractor (1) or system vehicle, comprising a group arranged at a driving station (9) of operating elements (10 to 15; 32 to 37) associated with a plurality of hydraulic or electrical coupling elements (19, 19a, 20, 20a, 45, 45a, 46, 46a, 47, 47a, 48, 48a) provided in the rear and/or front region and/or attachment region of the working machine, wherein the coupling elements (19, 19a, 20, 20a, 45, 45a, 46, 46a, 47, 47a, 48, 48a) can be connected to connecting lines (21, 22) of working implements (4) mounted to the working machine, **characterised in that** the operating elements (10 to 15; 32 to 37) and the coupling elements (19, 19a, 20, 20a, 45, 45a, 46, 46a, 47, 47a, 48, 48a) are respectively provided with a visual identification which gives information about the association of the respective operating element (10 to 15; 32 to 37) with one of the coupling elements (19, 19a, 20, 20a, 45, 45a, 46, 46a, 47, 47a, 48, 48a), that there are provided input means by way of which at least one coupling element (19, 19a, 20, 20a, 45, 45a, 46, 46a, 47, 47a, 48, 48a) can be brought into operative relationship with one of the other operating elements (10 to 15; 32 to 37) and that after a use of the input means a corresponding re-arrangement of the visual identification takes place.

2. An agricultural working machine according to claim 1 **characterised in that** the operating elements (10 to 15) are in the form of illuminated keys of a keypad (25).I

3. An agricultural working machine according to one of claims 1 and 2 **characterised in that** the visual identification is implemented by means of different colours.

4. An agricultural working machine according to claim 1 **characterised in that** the visual identification is implemented by means of different numerical digits or letters.

5. An agricultural working machine according to claim 1 **characterised in that** the visual identification is effected by means of plug-in elements (39, 40, 41, 42, 43, 44) which can be mounted to the operating elements (32 to 37) and which are interchangeable between same.

6. An agricultural working machine according to claim 5 **characterised in that** the plug-in elements (39, 40, 41, 42, 43, 44) can be removed from the coupling elements (19, 20, 45, 46, 47, 48) and can be mounted to plug-in sockets (38) of the operating elements (32 to 37).

7. An agricultural working machine according to claim 5 **characterised in that** the plug-in elements (39, 40, 41, 42, 43, 44) are in the form of closure caps removable from the coupling elements (19, 20, 45, 46, 47, 48).

8. An agricultural working machine according to claim 2 **characterised in that** an input device for configuration of the operating elements (10 to 15) of a keypad (25) is operatively connected to a switch- over device (23) which after a change in the association automatically correspondingly changes the colour identification of the keys or other operating elements (10 to 15).

9. An agricultural working machine according to claim 8 **characterised in that** the keys or other operating elements (10 to 15) have coloured LEDs (26 to 31), the respective colour of which can be altered by way of the input device.

## Revendications

1. Machine de travail agricole conformée en tracteur (1) ou en véhicule multitâche, comprenant un groupe, disposé sur un poste de conduite (9), d'éléments d'actionnement (10 à 15 ; 32 à 37) qui sont associés à plusieurs éléments de couplage hydrauliques ou électriques (19, 19a, 20, 20a, 45, 45a, 46, 46a, 47, 47a, 48, 48a) prévus dans la zone arrière et/ou avant et/ou dans la zone d'attelage de la machine de travail, les éléments de couplage (19, 19a, 20, 20a, 45, 45a, 46, 46a, 47, 47a, 48, 48a) pouvant être reliés à des lignes de branchement (21, 22) d'outils de travail (4) attelés à la machine de travail, **caractérisée en ce que** les éléments d'actionnement (10 à 15 ; 32 à 37) et les éléments de couplage (19, 19a, 20, 20a, 45, 45a, 46, 46a, 47, 47a, 48, 48a) sont chacun munis d'un repérage visuel qui renseigne sur la correspondance de l'élément d'actionnement respectif (10 à 15 ; 32 à 37) avec un des éléments de couplage (19, 19a, 20, 20a, 45, 45a, 46, 46a, 47, 47a, 48, 48a), **en ce qu'**il est prévu des moyens d'entrée permettant d'amener au moins un élément de couplage (19, 19a, 20, 20a, 45, 45a, 46, 46a, 47, 47a, 48, 48a) en liaison fonctionnelle avec un des autres éléments d'actionnement (10 à 15 ; 32 à 37), et **en ce que**, après utilisation des moyens d'entrée, il se produit une réorganisation correspondante du repérage visuel.

2. Machine de travail agricole selon la revendication 1, **caractérisée en ce que** les éléments d'actionnement (10 à 15) sont conformés en touches rétroéclairées d'un clavier (25).

3. Machine de travail agricole selon une des revendications 1 ou 2, **caractérisée en ce que** le repérage visuel s'effectue au moyen de différentes couleurs.

4. Machine de travail agricole selon la revendication 1, **caractérisée en ce que** le repérage visuel s'effectue au moyen de différents chiffres numériques ou lettres.

5. Machine de travail agricole selon la revendication 1, **caractérisée en ce que** le repérage visuel s'effectue au moyen d'éléments d'enfichage (39, 40, 41, 42, 43, 44) aptes à être montés sur les éléments d'actionnement (32 à 37) et échangeables entre ceux-ci.

6. Machine de travail agricole selon la revendication 5, **caractérisée en ce que** les éléments d'enfichage (39, 40, 41, 42, 43, 44) peuvent être retirés des éléments de couplage (19, 20, 45, 46, 47, 48) et montés sur des emplacements d'enfichage (38) des éléments d'actionnement (32 à 37).

7. Machine de travail agricole selon la revendication 5, **caractérisée en ce que** les éléments d'enfichage (39, 40, 41, 42, 43, 44) sont conformés en capuchons aptes à être retirés des éléments de couplage (19, 20, 45, 46, 47, 48).

8. Machine de travail agricole selon la revendication 2, **caractérisée en ce que**, pour affecter les éléments d'actionnement (10 à 15) d'un clavier (25), un dispositif d'entrée est relié de manière fonctionnelle à un dispositif de commutation (23) qui, après modification de la correspondance, modifie automatiquement de manière correspondante le repérage coloré des touches ou autres éléments d'actionnement (10 à 15).

9. Machine de travail agricole selon la revendication 8, **caractérisée en ce que** les touches ou autres éléments d'actionnement (10 à 15) comportent des DEL de couleur 26 à 31) dont les couleurs respectives peuvent être modifiées par l'intermédiaire du dispositif d'entrée.
